# EUROPEAN PATENT APPLICATION

(11) **EP 2 767 902 A2**
(43) Date of publication of application: **20.08.2014**
(21) Application number: 14154837.0
(22) Date of filing: 12.02.2014
(51) Int. Cl.: G06F 9/44

(54) **Method and apparatus for fast booting of user device**

(30) Priority: 13.02.2013 KR 20130015500
(71) Applicant: Samsung Electronics Co., Ltd, Gyeonggi-do 443-742 (KR)
(72) Inventor: Jun, Haesik, 443-742 Gyeonggi-do (KR)
(74) Representative: Jenkins, Richard Gavin

(57) **Abstract**

A method of fast booting of a user device is provided. The method includes detecting a movement of the user device in a power-off state, generating energy corresponding to the movement of the user device, changing the power-off state to a sleep mode state by the generated energy, partly performing a booting operation and waiting a period of time to perform the fast booting when changing to the sleep mode state, and performing the fast booting in response to a turn-on event of the user device.

## Description

### TECHNICAL FIELD

The present disclosure relates to a method and apparatus for fast booting of a user device. More particularly, the present disclosure relates to a method and apparatus for fast booting of the user device capable of reducing booting time which is spent in booting the user device in a hybrid-type booting scheme.

### BACKGROUND

Along with recent developments of digital technologies, various user devices capable of communicating and processing personal information while moving, such as a mobile communication terminal, a Personal Digital Assistant (PDA), an electronic organizer, a smart phone, and a tablet Personal Computer (PC), are being introduced. In such a user device, if user presses a power button, to initiate use, a booting process initializing the entire user device is required. However, such a booting process becomes slower as the number of functions of the user device increase and the user interface gets increasingly complicated. That is, software components such as an Operating System (OS), middleware, and an application are being updated according to the function or user device, which is adapted to the user device, and as such, use of resources (e.g., Central Processing Unit (CPU), memory, etc.) and peripheral devices increase, thereby increasing the boot time of the user device.

In order to improve such booting speed, recently, booting schemes, such as snapshot booting, warm booting, etc. are being applied to the user device.

The snapshot booting stores (copies) the state information (e.g., CPU state, Random Access Memory (RAM) state, user data, etc.) of the user device at the point of termination in a memory (e.g., HDD, flash memory, etc.), and terminates the user device when the user device is terminated (or power is turned off). Further, the user device supports fast booting by omitting the initialization process of the entire system at the time of booting the user device, by loading the state information of the user device stored in the non-volatile memory in the volatile memory (e.g., a read-only memory (RAM)) in the next booting, for restoration. Here, the state information of the user device stored in the non-volatile memory is called a snapshot image.

Further, the warm booting refers to a booting scheme in which the user device supplies small amount of power to only the region used as the volatile memory (e.g., RAM) in the power-off state and thus the data in the volatile memory is preserved in the memory. In the warm booting, the copying to the non-volatile memory is not necessary unlike that of snapshot booting, and thus fast booting is supported in a manner that initializes only the hardware to the previously used state at re-booting.

However, the snapshot booting provides a booting speed faster than that of the conventional general booting scheme, but is slower than the warm booting scheme. Furthermore, the warm booting scheme needs power for continually maintaining data of the volatile memory, and thus the battery is continually used.

Accordingly, there is a need for method and apparatus for fast booting of a user device, capable of reducing booting time from the power-off state of the user device by operation detection of the user device.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus for fast booting of a user device, capable of supporting effective hybrid-type fast booting in the user device.

Another aspect of the present disclosure is to provide a method and apparatus for fast booting of a user device, capable of reducing booting time from the power-off state of the user device by operation detection of the user device.

Another aspect of the present disclosure is to provide a method and apparatus for fast booting of a user device, capable of detecting movement of the user device without power in the power-off state, and supporting fast booting of the user device by generating energy based on the detected movement.

Another aspect of the present disclosure is to provide a method and apparatus for fast booting of a user device for providing a sleep mode where some parts needed for the next booting are performed in advance when a user device is turned off or a movement is detected in a power-off state, and supporting fast booting by omitting an initialization process at the next booting by the sleep mode.

Another aspect of the present disclosure is to provide a method and apparatus for fast booting of a user device for improving convenience of a user and usability of a user device by implementing an optimal environment for supporting fast booting in a user device.

In accordance with an aspect of the present disclosure, a method of fast booting of a user device is provided. The method includes detecting a movement of a user device in a power-off state, generating energy corresponding to the movement of the user device, changing the power-off state to a sleep mode state by the energy, partly performing a booting operation and waiting a period of time to perform the fast booting when changed to the sleep mode state, and performing the fast booting in response to a turn-on event of the user device.

In accordance with another aspect of the present disclosure, a method of fast booting of a user device is provided. The method includes changing booting data to a volatile memory in advance in response to a movement of the user device in a power-off state of the user device, performing the fast booting using the booting data which has been loaded in advance to the volatile memory, if a turn-on event is detected in a sleep mode state, and changing the sleep mode state to the power-off state if a timeout event is detected in the sleep mode state.

In accordance with another aspect of the present disclosure, a method of fast booting of a user device is provided. The method includes generating energy corresponding to a movement of the user device in a power-off state, determining whether to operate the user device using the generated energy, and canceling the power-off state upon determining whether to operate the user device.

In accordance with another aspect of the present disclosure, a user device is provided. The user device includes a memory including a non-volatile memory and a volatile memory, a power-triggering unit configured to detect a movement of the user device in a power-off state of the user device, and generate energy according to the movement, and a controller configured to change the power-off state into a sleep mode state where booting data is loaded to the volatile memory, in response to detection of a movement by the triggering unit, and perform fast booting using the booting data which has been loaded to the volatile memory in advance if a turn-on event is detected in the sleep mode state.

In accordance with another aspect of the present disclosure, a computer-readable recording medium has recorded a program that changes a power-off state of a user device to a sleep mode state where booting data is loaded in advance to a volatile memory in response to a movement of the user device, performs fast booting using the booting data which has been loaded in advance to the volatile memory if a turn-on event is detected in the sleep mode state, and changes the sleep mode state to the power-off state if a timeout event is detected in the sleep mode state.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 schematically illustrates a configuration of a user device according to an embodiment of the present disclosure;
FIG. 2 illustrates a state diagram for explaining fast booting of a user device according to an embodiment of the present disclosure;
FIG. 3 illustrates a signal flow between components at a time of fast booting in a user device according to an embodiment of the present disclosure;
FIG. 4 is a flowchart illustrating a power-off operation of a user device according to an embodiment of the present disclosure; and
FIG. 5 is a flowchart illustrating fast booting operation of a user device according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure relates to a method of fast booting capable of supporting fast booting of a user device by a hybrid scheme, and a user device that supports the method. According to an embodiment of the present disclosure, if movement occurs by user of the user device in the power-off state, the energy corresponding to the movement of the user device is generated, the movement of the user device is detected using the generated energy, and thereby the user device may get out of the power-off state. That is, the user device may generate energy corresponding to movement in the power-off state, determine whether to operate the user device using the generated energy, and cancel the power-off state at the time of determining the operation of the user device.

According to an embodiment of the present disclosure, the movement of the user device may be detected without power (i.e., no power supply) even in the power-off state, and thereby the process may automatically move to the sleep mode state where a particular part, which is needed in the actually booting process, is performed in the power-off state. In particular, when the movement of the user device is detected in the power-off state where the power of the user device is turned off, the movement of the user device may be converted into power (e.g., kinetic energy to electric energy).

Further, in an embodiment of the present disclosure, the movement of the user device may need to be distinguishable according to a capacity (certain time period or certain size) for stable movement detection of the user device. To this end, according to an embodiment of the present disclosure, there is provided an apparatus for detecting movement of the user device without power, converting the detected movement into energy to generate electric signals, and a method of fast booting using the apparatus. Further, in an embodiment of the present disclosure, a power-off state, a sleep mode state, and device-on state are provided to support efficient fast booting of the user device. Further, when the movement of the user device is detected in the power-off state, the fast booting is performed by moving to the sleep mode state, and when the turn-off request is sensed in the device-on state, the user device is not promptly turned off, and the procedure is moved to the sleep mode state to wait for a certain time so that fast booting may be performed.

In an embodiment of the present disclosure, when the state is changed between the sleep mode state and the device-on state, fast booting by the first booting scheme (e.g., the scheme corresponding to the feature of the warm booting scheme) is supported in the sleep mode state. Further, when the state is changed between the sleep mode state and the power-off state, the booting by the second booting scheme (e.g., a scheme corresponding to the feature of the snapshot booting (or cold booting) scheme) is delayed, and when the actual booting is performed in the sleep mode state, the fast booting by the first booting scheme (e.g., the scheme corresponding to the feature of the warm booting scheme) is supported. Further, according to an embodiment of the present disclosure, in the sleep mode state, the conversion into the power-off state may be performed when a timeout occurs.

Further, in an embodiment of the present disclosure, an expression "snapshot booting" (or cold booting) is used, but the expression is used merely for the convenience of explanation, and the fast booting of the present disclosure is not necessarily limited to the snapshot booting or warm booting, and may be compositively operated by adopting characteristic elements of various booting schemes.

Below, the configuration of the user device and the method of operating the user device according to various embodiments of the present disclosure will be described with reference to the attached drawings. The configuration of the user device and the method of operating the user device according to an embodiment of the present disclosure are not limited to the description below, and may be applied to various embodiments based on various embodiments described below.

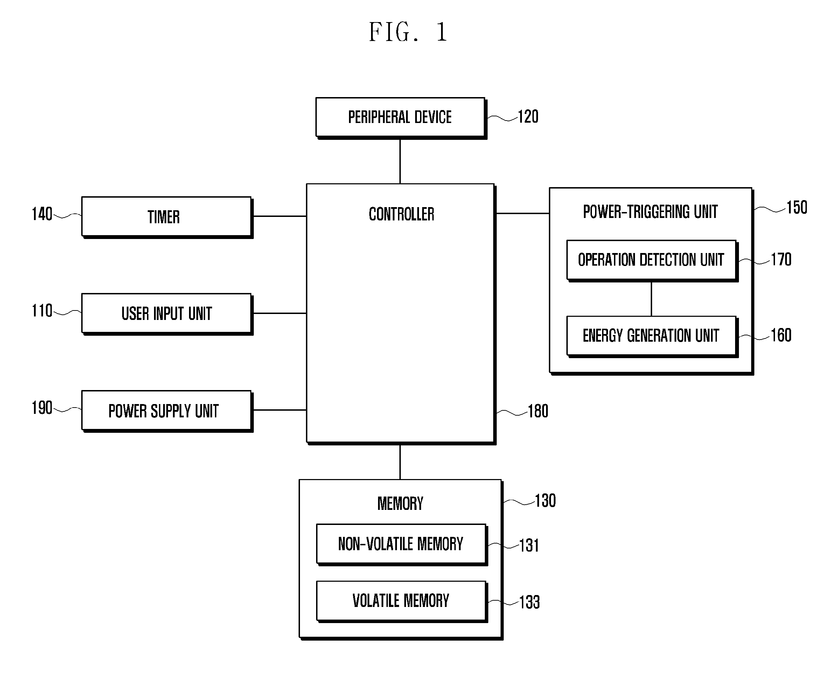

FIG. 1 schematically illustrates a configuration of a user device according to an embodiment of the present disclosure.

Referring to FIG. 1, the user device of the present disclosure includes a user input unit 110, a peripheral device 120, a memory 130, a timer 140, a power triggering unit 150, a controller 180, and a power supply unit 190. The user device of the present disclosure is not limited to the components illustrated in FIG. 1, and may be implemented to include more or less components.

The user input unit 110 generates input data for controlling operation of the user device according to a user's input. The user input unit 110 may include a key pad, a dome switch, a touch pad (static voltage/static current), a jog wheel, a jog switch, etc. The user input unit 110 may be implemented in a button form at the external side of the user device, and some buttons may be implemented as a touch panel. In particular, in the present disclosure, the user input unit 110 may include a power button for controlling power on/off of the user device, and may generate a power-on or power-off signal based on user's input for the power button.

The peripheral device 120 includes various devices, which may be implemented, such as a display unit (or a touch screen), an interface unit, a wireless communication unit, an audio processing unit, a location calculation module, a broadcast reception module, and a state sensing sensor. The interface unit may include a wired/wireless headset port, an external charger port, a wired/wireless data port, a memory card port, an audio input/output port, a video input/output port, an earphone port, etc. The wireless communication unit may include a mobile communication module, a Wireless Local Area Network (WLAN) module, a short range communication module (e.g., at least one module for Bluetooth, Bluetooth Low Energy (BLE), Radio Frequency Identification (RFID), Infrared Data Association (IrDA), Ultra Wideband (UWB), etc.), a location calculation module, a broadcast reception module, etc. Further, the audio processing unit may include a speaker, a microphone, etc., and the state sensing sensor may include a proximity sensor, an illumination sensor, an acceleration sensor, a geomagnetic sensor, etc.

The memory 130 may store a program for processing and controlling the controller 180, and may perform a function for temporarily storing inputted/outputted data. The memory 130 may continually or temporarily store the operating system of the user device, the program and data related with control of various functions of the user device, various applications and data which are executed and processed in the user device, and data which is externally received. The memory 130 may include one or more non-volatile memories 131 or one or more volatile memories 133. For example, the memory 130 may be implemented as various types of storage media such as a flash memory type, hard disk type, micro type, and card type (e.g., Secure Digital (SD) card, and Extreme Digital (XD) card) memory, a Random Access Memory (RAM), Static RAM (SRAM), a Read-Only Memory (ROM), a Programmable ROM (PROM), an Electrically Erasable PROM (EEPROM), a Magnetic RAM (MRAM), a magnetic disk, an optical disk type memory, etc. Further, the user device may be linked with the web storage which performs the storage function of the memory 130 in a network such as the Internet.

In detail, the memory 130 stores data for booting which is referred to for booting when the process of the user device moves to the sleep mode state. The data for booting includes various data which may be referred to at the time of booting, and is shown as a snapshot image or warm image in the present disclosure, but various embodiments of the present disclosure are not limited thereto. Further, as described above, the memory 130 may be divided into a non-volatile memory 131 (e.g., a flash memory, HDD, etc.) for storing data for fast booting, and a volatile memory 133 (e.g., RAM, etc.) where the data for fast booting is loaded. In particular, when the user device is turned off, the power for the volatile memory 133 is blocked unlike the non-volatile memory 131, and thereby the volatile memory 133 is initialized and the already loaded data is usually not maintained. However, in the present disclosure, the mode of the volatile memory 133 is changed to the sleep mode when the power-off entrance for the user device is requested, and receives power as much as needed for maintaining the already loaded data for a period of time to maintain the already loaded data.

When the user device is changed from the power-off state or device-on state to the sleep mode, the timer 140 is operated to count the period of time and generate counting data according thereto.

When the user device is in the power-off state, the power-triggering unit 150 is operated without power to detect the movements of the user device, and converts the detected movements into energy to generate electric signals. In particular, if the energy (kinetic energy) according to movements of the user device reaches a calculated capacity (i.e., predetermined capacity or more), the power-triggering unit 150 supports the state change of the sleep mode of the user device. Such a power-triggering unit 150 may include an energy generation unit 160 and an operation detection unit 170.

The energy generation unit 160 generates energy from the movement of the user device, and transmits the generated energy to the operation detection unit 170. In particular, the energy generation unit 160 generates electric energy using the kinetic energy according to movements of the user device, and transmits the generated electric energy to the operation detection unit 170. That is, the energy generation unit 160 may convert the movements of the user device into energy to generate electric signals. The energy generation unit 160 may include electro-conductive materials (not illustrated) and a driving unit (a moving element, a moving unit) (not illustrated). For example, the electro-conductive materials may be provided in a coil form, and may be implemented in an armature, inductor, wire coil, or any other loop-type conductive materials. The driving unit may be movable in a round-trip scheme, and may be implemented by a mass (a mass system, a mass body), which may affect the magnetic field, (a permanent magnet, an electromagnet, an inductor, and materials having magnetic permeability (e.g., metal, metal alloy, ceramics, and a mixture thereof)).

The energy generation unit 160 having such a configuration may convert kinetic energy of the driving unit into electric energy by the action of the electromagnetic induction as the driving unit generates kinetic energy by round-trip movements according to movements of the user device and the kinetic energy moves the magnetic field for the electro-conductive materials. Such an energy generation unit 160 may include one or more driving units (driving units having 1 or 2 or more axes) which affect the magnetic field, and even the directions (e.g., x-axis, y-axis, z-axis), which may be implemented 2 or more axes, may also be considered.

The operation detection unit 170 is operated by electric energy transmitted from the energy generation unit 160, and detects the operation of the user device from the electric energy. The operation detection unit 170 accumulates the electric energy transmitted from the energy generation unit 160, and if the electric energy is detected by a calculated capacity (e.g., a predetermined size, certain time, etc.) or more, the operation detection unit 170 determines the operation of the user device, and transmits a wake-up signal for converting the state of the controller 180 to a wake-up state, to the controller 180.

The controller 180 controls overall operation of the user device. For example, control related with the photographing of an object, or control related with a voice call, data communication, a video call, etc. may be performed. In particular, the controller 180 controls operations related with the fast booting function of the user device, and may include a control processor (not illustrated) for the control. In the present disclosure, the control processor (not illustrated) may be implemented within the controller 180, and may be implemented separately from the controller 180.

The controller 180 may perform at least two different booting processes according to the state where the state of the user device is changed in an embodiment of the present disclosure. For example, when the device-on state is changed to the sleep mode state, the controller 180 waits for the time-out period while maintaining the use data (data for booting) of the volatile memory 133 by the first booting scheme (e.g., a scheme corresponding to the characteristics of the warm booting scheme). Further, when the sleep mode state is changed to the device-on state again according to the turn-on event, the controller 180 performs the booting process by the first booting scheme (e.g., the scheme corresponding to the characteristics of the warm booting scheme), and the sleep mode state is changed to the power-off state according to the time-out event.

Further, when the power-off state is changed to the sleep mode state according to the movement detection event of the user device, the controller 180 performs part of the booting process for fast booting (i.e., loading the data for booting of the non-volatile memory 131 by the second booting scheme), and waits for the time-out period. Further, when the sleep mode state is changed to the device-on state according to the turn-on event, the controller 180 performs the booting process by the first booting scheme (e.g., the warm booting scheme), and the sleep mode state is changed to the power-off state according to the time-out event.

If a turn-off event of the user device power occurs, the controller 180 does not promptly turn off the user device, and changes the device-on state of the user device to sleep mode state. Further, when changed to the sleep mode state, the controller 180 turns off only the peripheral device 120, and loads the booting data (i.e., data for booting) stored in the non-volatile memory 131 to the volatile memory 133. If the turn-on event of the user device power occurs in the sleep mode state, the controller 180 initializes only the peripheral device 120, and controls fast booting using the booting data of the volatile memory 133. At this time, when changed to the sleep mode state, the controller 180 checks the time-out through the timer 140, and when the time-out event occurs, and changes the state of the user device from the sleep mode state to the power-off state to control the actual turn-off on the user device.

Further, in the power-off state where the user device is turned off, if the movement detection event of the user device occurs by the power-triggering unit 150, the controller 180 changes the state of the user device from the power-off state to the sleep mode state. Further, when changed to the sleep mode state, the controller 180 loads only the booting data stored in the non-volatile memory 131 to the volatile memory 133 without the turn-on of the peripheral device 120. If the turn-on event of the user device power occurs in the sleep mode state, the controller 180 omits the process of loading the booting data to the volatile memory 133 from the non-volatile memory 131, and controls fast booting using the booting data which has been loaded to the volatile memory 133. At this time, when changed to the sleep mode state, the controller 180 checks the time-out through the timer 140, and when the time-out event occurs, the state of the user device is changed from the sleep mode state to the power-off state to control the turn-off of the user device again.

The controller 180 may include a general purpose input/output (GPIO) pin (not illustrated) for receiving signals from the power-triggering unit 150 and the timer 140. For example, when the signals are received from the power-triggering unit 150 through the GPIO pin, the controller 180 may perform wake-up, and the signals are received from the timer 140 through the GPIO pin, the time-out for determining the change from the sleep mode state to the power-off state may be recognized. The GPIO pin may be respectively configured according to the power-triggering unit 150 and the timer 140.

Further, the controller 180 may control various operations related with the general functions of the user device in addition to the above-mentioned functions. For example, when executing a particular application, the controller 180 may control operation and screen display thereof. Further, the controller 180 may receive an input signal corresponding to various touch event inputs which are supported in the touch-based input interface, and control function operation according the input signal. Further, the controller 180 may control transmission and reception of various data based on the wired communication or wireless communication.

The power supply unit 190 may receive external power and internal power by control of the controller 180, and supply power needed for operation of each component.

The user devices according to various embodiments of the present disclosure may include all devices using an Application Processor (AP), a Graphic Processing Unit (GPU), and a Central Processing Unit (CPU), such as all information communication devices and multimedia devices which support functions of the present disclosure, and application devices thereof. For example, the user device may include devices such as a digital camera, a tablet Personal Computer (PC), a smart phone, a Portable Multimedia Player (PMP), a Media Player (e.g., an MP3 player), a portable game console, and a Personal Digital Assistant (PDA), which are operated according to respective communication protocols corresponding to various communication systems.

Further, various embodiments described in the present disclosure may be implemented in a recording medium which may be readable by a computer or a device similar to the computer, using software, hardware, and a combination thereof. In hardware implementation, various embodiments of the present disclosure may be implemented using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, or electric units for performing other functions. In some cases, various embodiments of the present disclosure may be implemented as the controller 180. In software implementation, various embodiments such as the procedures and functions described in the present specification may be implemented as separate software modules. The respective software modules may perform one or more functions and operations described in the present specification.

Here, the recording medium may record a program which changes the mode to the sleep mode state which loads the booting data to the volatile memory in advance in response to the movement of the user device which is detected in the power-off state of the user device, performs the fast booting using the booting data which has been loaded to the volatile memory in advance if a turn-on event is detected in the sleep mode state, and changes the sleep mode state to the power-off state if the time-out event is detected in the sleep mode state.

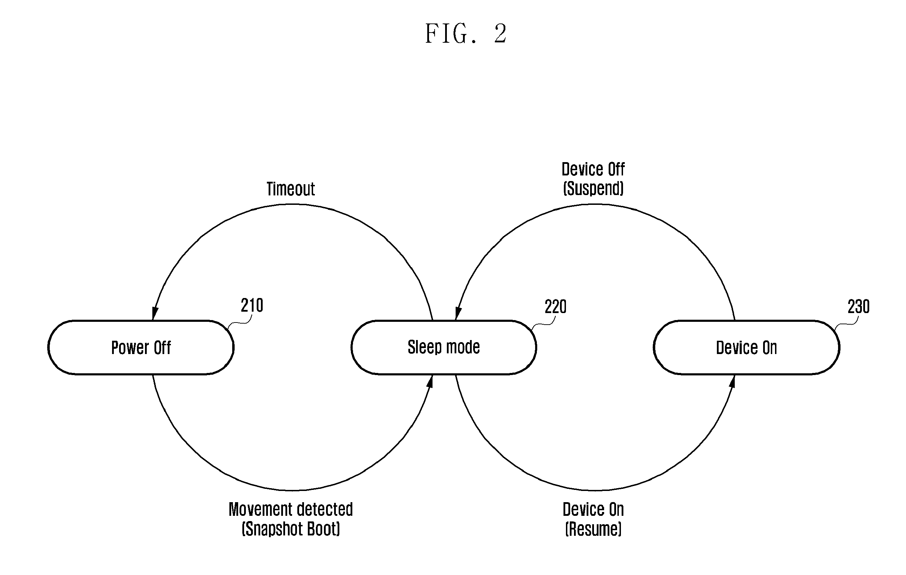

FIG. 2 illustrates a state diagram for explaining fast booting of a user device according to an embodiment of the present disclosure.

Referring to FIG. 2, the user device of the present disclosure may perform operations for respective states such as a power-off 210, sleep mode 220, and device-on. Further, in the present disclosure, various booting schemes for fast booting, such as warm booting and snapshot booting, are supported in the sleep mode 220 of the user device.

The device-on 230 state indicates the state where the user device is turned on and is being operated, and user may use all functions of the user device in the device-on state.

The sleep mode 220 state indicates the state where power supplied to the peripheral device 120 within the user device is blocked while maintaining the data of the volatile memory 133 to support the fast booting of the user device. In the present disclosure, the sleep mode 220 state may be changed when user requests the turn-off in the device-on 230 state of the user device or when the movement is detected in the power-off 210 state of the user device.

For example, when the user inputs the power on/off button to turn off the user device in the device-on 230 state, the user may think that the user device is turned off, but internal to the user device, the user device may enter the sleep mode where only the peripheral device 120 is turned off while maintaining the booting data of the volatile memory 133 for the next fast booting (e.g., warm booting). Such a process is called a target suspend, and the battery consumption may be minimized by blocking the power of most of devices (e.g., the peripheral device 120) inside the user device. Further, if the user turns on (pressing the power on/off button) the user device again in the sleep mode 220 state, the state before the mode of the user device is changed to the sleep mode 220 remains in the volatile memory 133, and thus only the hardware such as the peripheral device 120 is initialized and the user device may be resumed quickly, thereby allowing restoration of the user device into a usable state within a short time. Such a process is called a target resume, and many portions of initializing may be avoided.

The power-off 210 state indicates the state where the user device is completely turned off and is not operated, and indicates the actual power-off state where power supplied to the volatile memory 133 is blocked as well as the peripheral device 120. In the present disclosure, the power off 210 state may be changed to the sleep mode 220 state in response to the turn-off request of the user device of the user, and the sleep mode 220 state may be changed after a certain time passes (i.e., timeout). Further, in the present disclosure, the movements of the user device occur by user in the power-off 210 state, the user device may detect a power-triggering event (i.e., operation of movements of the user device) by the power-triggering unit 150 even in the state where the power is blocked, i.e., the power-off 210 state. Further, if a power-triggering event is detected and the power-triggering event satisfies a condition, the mode of the user device may be changed to the sleep mode 220 state, the booting data may be loaded to the volatile memory 133, and the user device may wait in the state where fast booting is possible (e.g., snapshot booting). Here, in the present disclosure, warm booting and snapshot booting are clearly stated in a scheme for fast booting in the sleep mode 220 state which is changed in response to the power turn-off or power turn-on request, but various embodiments of the present disclosure are not limited thereto, and various fast booting schemes may be used.

Hereinafter, the operation of a change from the device-on 230 state to the sleep mode 220 state, and the operation of a change from the power-off 210 state to the sleep mode 220 state of the present disclosure, will be described with reference to the above-described respective states.

First, the operation of a change from the device-on 230 state to the sleep mode 220 state will be described below.

The user device may perform the device turn-off operation in response to the power on/off button input in the device-on 230 state. That is, if user inputs the power on/off button to turn off the user device, the user device blocks supply of power to the peripheral device 120, etc., supplies power to the volatile memory 133, and changes the mode to the sleep mode 220 state where data (data for booting) is maintained. When changed to the sleep mode 220 state, the user device may check the timeout through the timer 140. Further, if the timeout is checked in the sleep mode 220 state, the user device changes the mode to the power-off 210 state. In contrast, if the power on/off button is inputted before the timeout is checked in the sleep mode 220 state, the user device changes the mode to the device-on 230 state in response to the power on/off button input. At this time, as the booting data exists in the volatile memory 133, the user device initializes only the peripheral device 120, and supports fast booting (e.g., warm booting scheme) using the booting data.

Next, the operation of a change from the power-off 210 state to the sleep mode 220 state will be described below.

If the movement of the user device is detected through the power-triggering unit 150 in the power-off state 210, the user device changes the mode to the sleep mode 220 state to support fast booting (e.g., snapshot booting) of the user device. At this time, when changed to the sleep mode 220 state, the user device loads the booting data to the volatile memory 133 for fast booting, and waits for the device turn-on request. Further, when changed to the sleep mode 220 state, the user device may check the timeout through the timer 140. If the timeout is checked in the sleep mode 220 state, the user device changes the mode to the power-off 210 state. In contrast, if the power on/off button is inputted before the timeout is checked in the sleep mode 220 state, the user device may perform the device turn-on operation in response to the power on/off button input. That is, if the power on/off button is inputted to turn on the user device, the user initializes only the peripheral device 120, and supports fast booting (e.g., snapshot booting scheme) using the booting data which has been loaded to the volatile memory 133 in the sleep mode 220 state.

Likewise, in various embodiments of the present disclosure, even in the power-off 210 state where the user device is completely turned off, the movement of the user device may be detected through the power-triggering unit 150 which does not need separate power supply. Further, if the movement of the user device is detected by a period of time or size or more through the power-triggering unit 150, the advance booting operation may be performed in a manner that is not visible to the actual user. At this time, in an embodiment of the present disclosure, energy (e.g., kinetic energy) according to movements of the user device is generated through power-triggering unit 150, and if the generated energy becomes a calculated capacity or more, the mode is changed go the sleep mode 220 state, and the booting data for fast booting may be loaded. Thereafter, if the power on/off button is by user, the user device may quickly enter the device-on 230 state using the booting data.

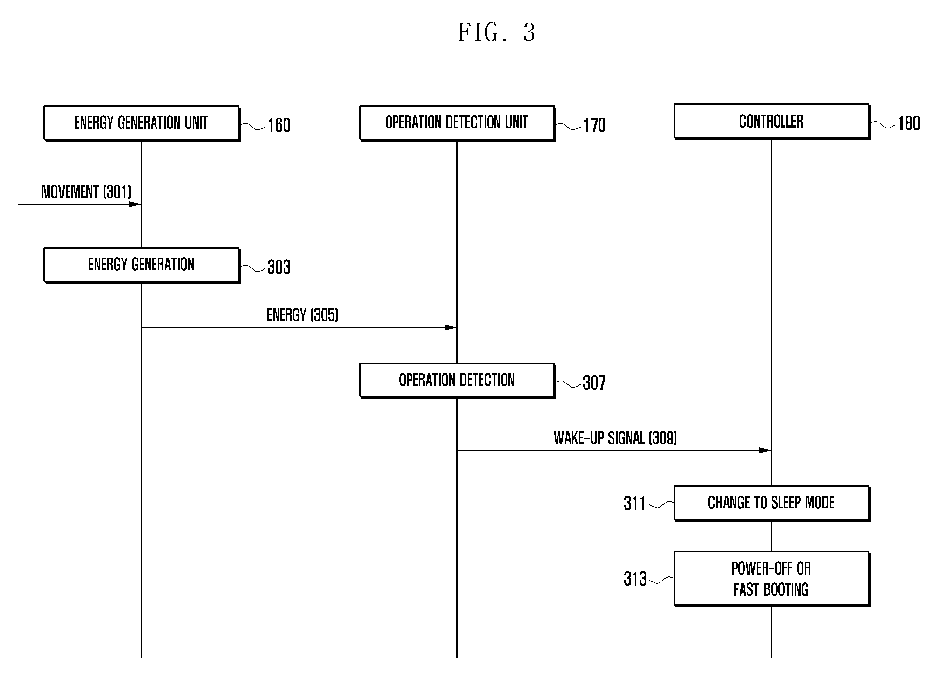

FIG. 3 illustrates a signal flow between components at a time of fast booting in a user device according to an embodiment of the present disclosure.

Referring to FIG. 3, the energy generation unit 160 may generate energy, at operation 303, from the movements of the user device, at operation 301, and transmit the generated energy to the operation detection unit 170 at operation 305. For example, the energy generation unit 160 may generate electric energy using kinetic energy according to movements of the user device. Further, the generated electric energy may be transmitted to the operation detection unit 170.

The operation detection unit 170 is operated by electric energy supplied from the energy generation unit 160, and may detect operation of the user device from the electric energy, at operation 307. At this time, the operation detection unit 170 may accumulate electric energy supplied from the energy generation unit 160, and check whether the electric energy is detected by a calculated capacity (e.g., predetermined size, certain time) or more. If the electric energy is detected by a capacity or more, the operation detection unit 170 may determine that the user device is operating. Further, when the operation of the user device is determined, the operation detection unit 170 transmits a wake-up signal for changing the state of the controller 180 to a wake-up state, to the controller 180, at operation 309.

The controller 180 is operated (i.e., woken up) by the wake-up signal transmitted from the operation detection unit 180, and changes the state of the user device from the power-off 210 state to the sleep mode 220 state, at operation 311. When changed to the sleep mode 220 state, the controller 180 controls the minimum power supply for maintaining only data to the memory (particularly, the volatile memory 133) without power supply to the peripheral devices 120. Further, the controller 180 may wait for fast booting (e.g., warm booting) by loading (e.g., loading by the feature of the snapshot booting scheme) the booting data to the volatile memory 133. Further, when changed to the sleep mode 220 state, the controller 180 may manage the timeout by the timer 140. Further, when changed to the sleep mode 220 state, the controller 180 may control the operation detection unit 170 to stop the operation of detecting the operation of the user device, or ignore the wake-up signal transmitted by the operation detection unit 170.

The controller 180 may control a change to the power-off 210 state or fast booting according to the timeout on the timer 140 or the power on/off button input by user in the state of waiting for fast booting, at operation 313. For example, if the timeout is detected by the timer 140 in the sleep mode 220 state, the controller 180 changes the state of the user device to the power-off 210 state. When entering to the power-off 210 state, the controller 180 terminates the above-described control operation until the next wake-up signal is received. Further, if the input of the power on/off button is detected in the sleep mode 220 state, the controller 180 may perform fast booting (e.g., booting by the feature of the warm booting scheme) using the booting data loaded to the volatile memory 133, and change the state of the user device to the device-on 230 state.

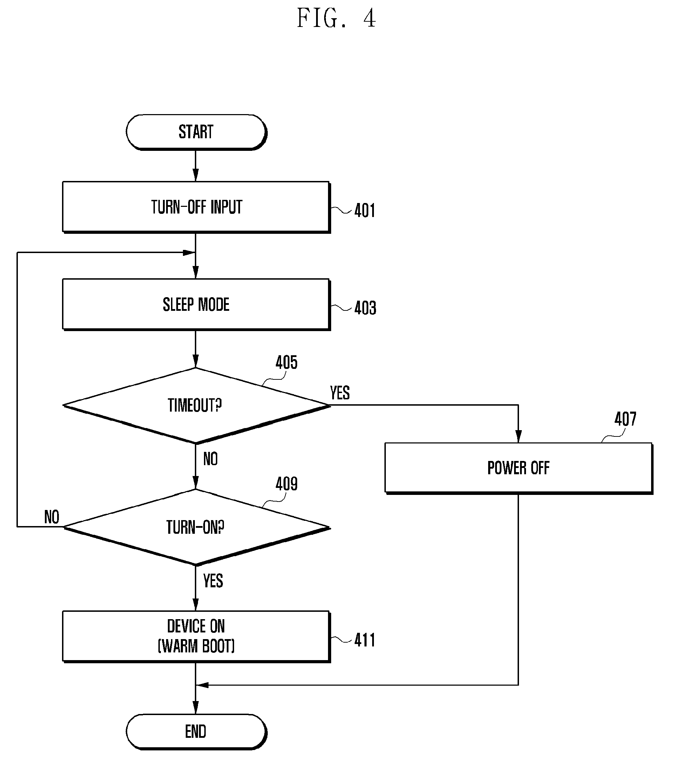

FIG. 4 is a flowchart illustrating a power-off operation of a user device according to an embodiment of the present disclosure.

Referring to FIG. 4, an operation example when the turn-off of the user device is request as user inputs the power on/off button in the device-on 230 state is illustrated.

Initially, if the turn-off input by the power on/off button is received during operation in the device-on 230 state of the user device, at operation 401, the controller 180 changes the state of the user device from the device-on 230 state to the sleep mode 220 state. For example, the user may input the turn-off using the power on/off button while using the user device. Then in response to the turn-off input, the controller 180 may wait for certain time after changing the state to the sleep mode 220 state without promptly changing the state to the power-off 210 state at operation 403. That is, the controller 180 may maintain the volatile memory 133, which has been used for the next fast booting (e.g., booting by the feature of the warm booting scheme), and block power supply to the peripheral device 120.

The controller 180 may determine whether certain time has passed (i.e., timeout) through the timer 140 in the sleep mode 220 state at operation 405.

If the timeout is detected (Yes of operation 405), the controller 180 controls the turn-off of the user device at operation 407. That is, the controller 180 changes the state of the user device from the sleep mode 220 state to the power off 210 state.

If the timeout is not detected (No of operation 405), the controller 180 may determine whether there is an input for the turn-on of the user device at operation 409. That is, the controller 180 may check an input by the power on/off button of the user until a timeout occurs in the sleep mode 220 state.

If an input for the turn-on of the user device is not received (No of operation 409), the controller 180 may control the operation below while maintaining the sleep mode 220 state by proceeding to operation 403.

If an input for the turn-on of the user device is received (Yes of operation 409), the controller 180 controls the turn-on of the user device at operation 411. That is, the controller 180 changes the state of the user device to the device-on 230 state in the sleep mode 220 state. At this time, the controller 180 performs fast booting (e.g., booting according to the feature of the warm booting scheme) using the booting data which is being maintained in the volatile memory 133 according to the sleep mode 220 state. That is, the controller 180 may restore the user device into a usable state within a short time by initializing only the hardware such as the peripheral device 120 as the booting data exists in the volatile memory 133.

Further, it was described in FIG. 4 that operation 405 is first performed, and then operation 409 is performed for the convenience of description, but it is not limited thereto, and operation 409 may be first performed, and then operation 405 may be performed. That is, operations 407 and 409 illustrate operations of determining whether an interrupt has occurred by input of the power on/off button until before the timeout in the sleep mode 220 state, changing the state of the user device to the device-on 230 state when an interrupt occurs by the power on/off button before the timeout, and changing the state of the user device to the power-off 210 state when the interrupt by the power on/off button does not occur until the timeout.

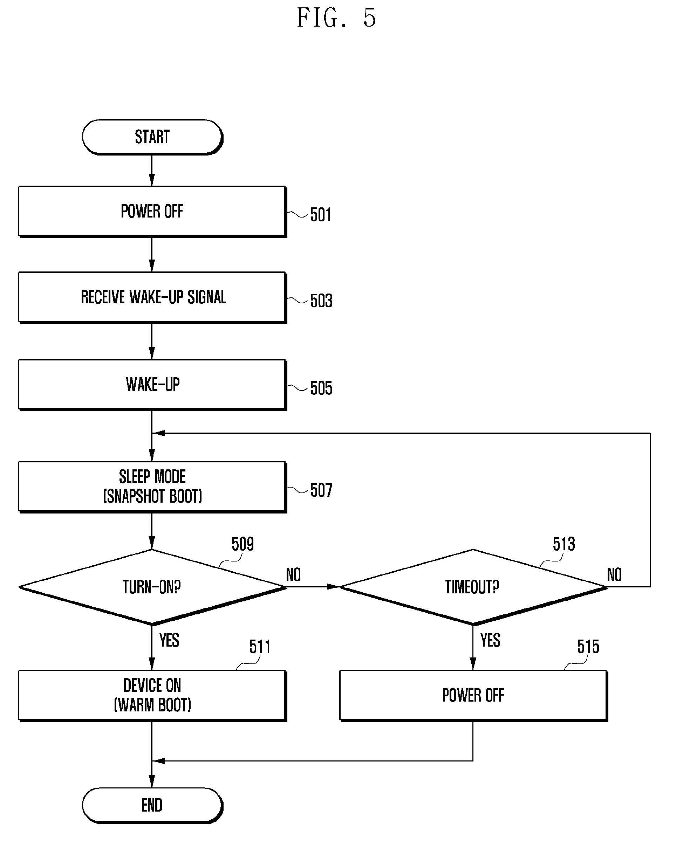

FIG. 5 is a flowchart illustrating fast booting operation of a user device according to an embodiment of the present disclosure.

Referring to FIG. 5, an operation example when changing the state of the user device from the power-off 210 state to the sleep mode 220 state according to the detection of the movement of the user device, turning off the user device according to the timeout, or turning on the user device according to a button input of the power on/off button of the user is illustrated.

Initially, the controller 180 may receive a wake-up signal from the power-triggering unit 150, at operation 503, in the power-off 210 state of the user device, at operation 501. Then the controller 180 may perform wake-up according to the wake-up signal, at operation 505. For example, when user moves the user device in the power-off state 210, the power-triggering unit 150 may generate electric energy from the kinetic energy according to movements of the user device through the energy generation unit 160. Further, the power-triggering unit 150 may determine whether to operate the user device by referring to the electric energy through the operation detection unit 170. Further, when determining the operation of the user device through the operation detection unit 170, the power-triggering unit 150 may generate a wake-up signal which is an interrupt for the wake-up and input the wake-up signal in the controller 180. Then the controller 180 performs wake-up in response to the wake-up signal.

When the wake-up is performed by the power-triggering unit 150, the controller 180 changes the state of the user device from the power-off 210 state to the sleep mode 220 state at operation 507. When changed to the sleep mode 220 state, the controller 180 may wait for fast booting (e.g., booting by the feature of warm booting) by loading the booting data (e.g., loading by the feature of the snapshot booting scheme) to the volatile memory 133 when changing the mode to the sleep mode 220 state. Further, the controller 180 may manage the timeout by the timer 140 when changing the mode to the sleep mode 220 state.

The controller 180 determines whether there is an input for the turn-on of the user device in the sleep mode 220 state, at operation 509. That is, the controller 180 may sense whether there is an input by the power on/off button in the sleep mode 220 state.

If an input by the power on/off button is detected in the sleep mode 220 state (Yes of operation 509), the controller 180 controls the turn-on of the user device, at operation 511. That is, the controller 180 changes the state of the user device from the sleep mode 220 to the device-on 230 state. That is, the controller 180 performs fast booting (e.g., booting by the feature of the warm booting scheme) using the booting data which is being maintained in the volatile memory 133 according to the sleep mode 220 state. That is, the controller 180 may process fast booting by only initializing only the hardware such as the peripheral device 120 as the booting data exists in the volatile memory 133.

If an input by the power on/off button is not detected in the sleep mode 220 state (No of operation 509), the controller 180 determines whether certain time has passed (i.e., the timeout) through the timer 140, at operation 513.

If the timeout is not detected (No of operation 513), the controller 180 may control the performance of operation below while maintaining the sleep mode 220 state by proceeding to operation 507 described above.

If the timeout is detected (Yes of operation 513), the controller 180 controls the turn-off of the user device, at operation 515. That is, the controller 180 changes the state of the user device from the sleep mode 220 state to the power-off 210 state.

Further, it was explained above that operation 509 is first performed, and then operation 513 is performed, but it is not limited thereto, and operation 513 may be first performed, and then operation 509 may be performed. That is, operations 509 and 513 illustrate operations of determining whether there has been an interrupt by the power on/off button until the timeout in the sleep mode 220 state, and changing the state of the user device to the device-on 230 state when an interrupt by the power on/off button occurs before the timeout, and changing the state of the user device to the power-off 210 state when the interrupt by the power on/off button does not occur until the timeout.

The foregoing embodiment of the present disclosure may be implemented in an executable program command form by various computer means and be recorded in a computer readable recording medium. In this case, the computer readable recording medium may include a program command, a data file, and a data structure individually or a combination thereof. In the meantime, the program command recorded in a recording medium may be specially designed or configured for the disclosure or be known to a person having ordinary skill in a computer software field to be used. The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, flash memory storing and executing program commands. Further, the program command includes a machine language code created by a complier and a high-level language code executable by a computer using an interpreter. The foregoing hardware device may be configured to be operated as at least one software module to perform an operation of the disclosure, and vice versa.

According to a method and apparatus for fast booting of a user device suggested in the present disclosure, when a turn-off is requested in the device-on state of the user device, or when a turn-on is requested in the power-off state of the user device, fast booting for quickly responding to the turn-on request of the user device may be provided by waiting for the next booting in advance by the sleep mode. That is, according to the present disclosure, when user tries the turn-on after user requests the turn-off of the user device, or when user tries the turn-on in the power-off state of the user device, the user device may be usable within shorter time.

According to the present disclosure, a hybrid scheme booting, such as supporting fast booting in the warm booting scheme at the time of changing the state between the sleep mode and the device-on mode, and supporting fast booting according to the feature of the snapshot booting scheme at the time of changing the state between the sleep mode and the power-off state, may be provided. In particular, according to the present disclosure, even in the power-off state of the user device, the movement of the user device is detected without power and thereby the mode of the user device is automatically changed to the sleep mode for fast booting, and thus the needs of user who desires fast booting of the user device may be satisfied. Further, according to the present disclosure, as the movement of the user device may be detected without power in the power-off state, continuous battery consumption may be minimized, and thus the period until the complete electric discharge may be extended even in the case of storing the user device for a long time. Further, according to the present disclosure, when a predefined timeout occurs while maintaining the booting data in the sleep mode of the user device, the user device is set to be completely terminated, and thus unnecessary power consumption may be minimized while considering fast booting.

According to the present disclosure, in a user device which is used after stored for a long time, when user lifts up or moves the user device, the movement may be detected and the booting operation (e.g., snapshot booting, etc.) may be proceeded in advance to wait for the next booting by the booting data. Further, when the next booting is requested (e.g., the turn-on request of the user device), fast booting (e.g., the warm booting) may be proceeded based on the booting data, and the user device may be turned on quickly.

Hence, according to the present disclosure, by implementing the optimal environment for supporting fast booting in a user device, the user convenience may be improved, and usability, convenience, and competitiveness of the user device may be improved. The present disclosure may be simply implemented to all forms of user devices and various devices corresponding to the user devices.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of fast booting of a user device, the method comprising:
detecting a movement of a user device in a power-off state;
generating energy corresponding to the movement of the user device;
changing the power-off state to a sleep mode state by the energy;
partly performing a booting operation and waiting a period of time to perform the fast booting when changed to the sleep mode state; and
performing the fast booting in response to a turn-on event of the user device.

2. The method of claim 1, wherein the detecting of the movement comprises detecting the movement of the user device without power.

3. The method of claim 2, wherein the generating of the energy comprises generating electric energy from kinetic energy according to the movement of the user device.

4. The method of claim 3, further comprising:
determining to operate the user device if the electric energy is greater or equal to a calculated capacity; and
changing a state of the user device to the sleep mode state upon determining to operate the user device.

5. The method of claim 2, further comprising:
receiving a wake-up signal in the power-off state;
performing a wake-up in response to the wake-up signal; and
changing a state of the user device to the sleep mode state.

6. The method of claim 2, wherein the waiting the period of time to perform the fast booting comprises:
loading booting data to a memory; and
managing a certain timeout.

7. The method of claim 6, wherein the performing of the fast booting comprises:
omitting a process of loading the booting data to the memory, and performing the fast booting by using the booting data which has been loaded in advance to the memory if the turn-on event is detected in the sleep mode state; and
changing a state of the user device from the sleep mode state to the power-off state, and turning of the user device if a timeout is detected in the sleep mode state.

8. The method of claim 1, wherein booting data is loaded to a memory by a snapshot booting scheme when changing a state of the user device from the power-off state to the sleep mode state, and the state of the user device is changed to a device-on state by performing the fast boot by a warm booting scheme using the booting data according to the turn-on event in the sleep mode state.

9. The method of claim 1, further comprising:
changing a state of the user device to the sleep mode state in response to a turn-off event of the user device in a device-on state of the user device; and
changing the state of the user device to the power-off state when a timeout is detected in the sleep mode state.

10. The method of claim 9, further comprising:
maintaining booting data of a memory when changed to the sleep mode state; and
changing the state of the user device to the device-on state by performing fast booting by a warm booting scheme using the booting data if the turn-on event is detected before the timeout in the sleep mode state.

11. The method of claim 1 wherein the changing to the sleep mode state comprises:
loading booting data to a memory in advance in response to a movement of the user device in a power-off state of the user device.

12. A user device comprising:
a memory;
a power-triggering unit configured to detect a movement of the user device in a power-off state of the user device, and generate energy according to the movement; and
a controller configured to change the power-off state into a sleep mode state where booting data is loaded to the memory, in response to detection of a movement by the triggering unit, and perform fast booting using the booting data which has been loaded to the memory in advance if a turn-on event is detected in the sleep mode state.

13. The user device of claim 12, wherein the power-triggering unit operates without power in the power-off state of the user device.

14. The user device of claim 13, wherein the power-triggering unit comprises:
an energy generation unit to generate electric energy from kinetic energy corresponding to a movement of the user device; and
an operation detection unit to determine operation of the user device if the electric energy is equal to or greater than a calculated capacity.

15. The user device of claim 14, wherein the controller performs a wake-up according to reception of a wake-up signal from the operation detection unit in the power-off state, and changes a state of the user device from the power-off state to the sleep mode state.

16. The user device of claim 13, wherein the controller loads booting data to the memory by a snapshot booting scheme when the power-off state is changed to the sleep mode state, and performs fast booting by a warm booting scheme using the booting data according to the turn-on event in the sleep mode state.

17. The user device of claim 13, wherein the user device includes a timer that generates a timeout event in the sleep mode state of the user device.

18. The user device of claim 17, wherein the controller changes the sleep mode state to the power-off state if the timeout event is detected in the sleep mode state.

19. The user device of claim 13, wherein the controller changes a state of the user device to the sleep mode state in response to a turn-off event of the user device in a device-on state of the user device, and changes the state of the user device to the power-off state when a timeout is detected in the sleep mode state.

20. The user device of claim 19, wherein the controller maintains booting data of the memory when changed to the sleep mode state, and changes the state of the user device to the device-on state by performing fast booting by a warm booting scheme using the booting data if the turn-on event is detected before the timeout in the sleep mode state.

21. A computer-readable recording medium having recorded a program that changes a power-off state of a user device to a sleep mode state where booting data is loaded in advance to a memory in response to a movement of the user device, performs fast booting using the booting data which has been loaded in advance to the memory if a turn-on event is detected in the sleep mode state, and changes the sleep mode state to the power-off state if a timeout event is detected in the sleep mode state.
